# EUROPEAN PATENT APPLICATION

(11) **EP 4 227 855 A1**
(43) Date of publication of application: **16.08.2023**
(21) Application number: 22213801.8
(22) Date of filing: 15.12.2022
(51) Int. Cl.: G06N 3/04, G06N 3/10, G06N 5/045

(54) **GRAPH EXPLAINABLE ARTIFICIAL INTELLIGENCE CORRELATION**

(30) Priority: 11.02.2022 US 202217669712
(71) Applicant: Fujitsu Limited, Kawasaki-shi, Kanagawa 211-8588 (JP)
(72) Inventor: McThrow, Michael, Sunnyvale, CA 94085 (US); Uchino, Kanji, Sunnyvale, CA 94085 (US)
(74) Representative: Hoffmann Eitle

(57) **Abstract**

A method may include obtaining a first result of a graph explainable artificial intelligence (GXAI) classification analysis of a dataset of graph-structured data and a second result of a graph analysis algorithm that represents relationships between elements of the dataset. The method may include determining a correlation between the first result and the second result and generating a display within a graphical user interface (GUI) that visualizes similarities between the first result and the second result based on the correlation. Determining the correlation between the first result and the second result may include generating a first vector of the first result of the classification analysis using GXAI techniques and a second vector of the second result of the graph analysis algorithm. A Pearson correlation coefficient or a cosine similarity coefficients may be computed based on the first vector and the second vector in which the computed coefficients are indicative of the correlation.

## Description

The present disclosure generally relates to graph explainable artificial intelligence correlation.

### BACKGROUND

A dataset may be structured in a graph form in which data points of the dataset may be presented as multiple nodes referred to as a dataset of graph-structured data. Nodes included in the dataset of graph-structured data may be grouped together according to similarities and differences between the nodes. Relationships between two nodes included in the dataset of graph-structured data may be indicated by a line called an edge that connects the two nodes. In some situations, the edges between the nodes be directed edges that indicate directionality of the relationship between the nodes and may be indicated by single-headed or double-headed arrows rather than lines.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, a method may include obtaining a first result of a graph explainable artificial intelligence (GXAI) classification analysis of a dataset of graph-structured data and a second result of a graph analysis algorithm that represents a relationship between elements of the dataset of graph-structured data. The method may include determining a correlation between the first result and the second result and generating a display within a graphical user interface (GUI) that visualizes similarities between the first result and the second result based on the correlation. Determining the correlation between the first result and the second result may include generating a first vector of the first result of the classification analysis using GXAI techniques and a second vector of the second result of the graph analysis algorithm. A Pearson correlation coefficient or a cosine similarity coefficients may be computed based on the first vector and the second vector in which the computed coefficients are indicative of the correlation.

The object and advantages of the embodiments will be realized and achieved at least by the elements, features, and combinations particularly pointed out in the claims. It is to be understood that both the foregoing general description and the following detailed description are explanatory and are not restrictive of the invention, as claimed.

### BRIEF DESCRIPTION OF THE DRAWINGS

Example embodiments will be described and explained with additional specificity and detail through the accompanying drawings in which:
Figure 1 is a diagram representing an example system of graph explainable artificial intelligence (GXAI) correlation according to at least one embodiment of the present disclosure;
Figures 2A-2B illustrate examples of a graphical user interface configured to display results of a GXAI correlation process according to at least one embodiment of the present disclosure;
Figure 3 is a flowchart of an example method of performing graph explainable artificial intelligence correlation according to at least one embodiment of the present disclosure;
Figures 4A-4C illustrate examples of training graphs for performing node index analysis according to at least one embodiment of the present disclosure;
Figure 4D illustrates an example analysis of the training graphs for node index analysis according to at least one embodiment of the present disclosure;
Figures 4E-4F illustrate examples of test graphs analyzed according to node index analysis according to at least one embodiment of the present disclosure;
Figure 5 is a flowchart of an example method of assessing the similarity between GXAI contribution scores and graph analysis algorithms according to at least one embodiment of the present disclosure; and
Figure 6 is an example computing system.

### DETAILED DESCRIPTION

Information may be presented as datasets in which the datasets are presented in graph form (referred to as "graph-structured data"). Graph-structured data may be analyzed using graph explainable artificial intelligence (GXAI) techniques or graph analysis algorithms. The graph analysis algorithms may provide insights and explanations regarding the graph-structured data, such as predicting behavior patterns, identifying important nodes or edges, and identifying anomalous characteristics of the corresponding dataset. The GXAI techniques may include providing the graph-structured data to a machine-learning model or other artificial-intelligence-enabled computing system to evaluate the corresponding dataset. The GXAI techniques may provide robust insights and detailed analyses of the graph-structured data, which may or may not cover different perspectives or provide more comprehensive analyses than the results of the graph analysis algorithms. However, the results provided via the GXAI techniques may be difficult for users, such as data scientists, to understand because the GXAI results may be presented in an unfamiliar, unconventional, or complex format; therefore, such results may not be user friendly. Additionally or alternatively, the GXAI results may cover a wide variety of metrics or details regarding the graph-structured data such that the users reviewing the GXAI results may not properly or effectively interpret the GXAI results, which may still require the users to drill down through many layers to get to the desired information to evaluate the dataset of an AI model. For example, analyzing a particular dataset of graph-structured data using a particular GXAI technique may yield contribution scores corresponding to each node or edge included in the particular dataset in which the contribution scores denote how each of the nodes or edges contribute to a particular classification or regression analysis of the particular dataset.

Framing the analysis results of graph-structured data provided by the GXAI techniques in terms of or with reference to the results of graph analysis algorithms may provide users with a better overall understanding of the graph-structured data, thereby adding to user friendliness. The present disclosure relates to, among other things, identifying correlations between the GXAI results and the graph analysis algorithm results relating to the same dataset of graph-structured data. Determining similarities and identifying correlations between the GXAI results (e.g., the GXAI contribution scores) and the graph analysis algorithm results may facilitate generation of a user-friendly graphical user interface (GUI) that allows users to leverage their existing understanding of the datasets of graph-structured data from reviewing a visualization of the graph analysis algorithm results and the GXAI results in the GUI to better understand the GXAI results, thereby enhancing the usability of the GUI to present more understandable GXAI results. Additionally or alternatively, the GUI may present a visualization correlating the GXAI results and the graph analysis algorithm results, which may improve the users' understandings of the graph analysis algorithm results because the users may make connections or draw conclusions about the graph analysis algorithm results based on their improved understanding of the GXAI results. As such, performing GXAI correlation and generating a GUI based on the GXAI correlation according to the present disclosure may improve usability and interpretability of the datasets of graph-structured data.

Embodiments of the present disclosure are explained with reference to the accompanying figures.

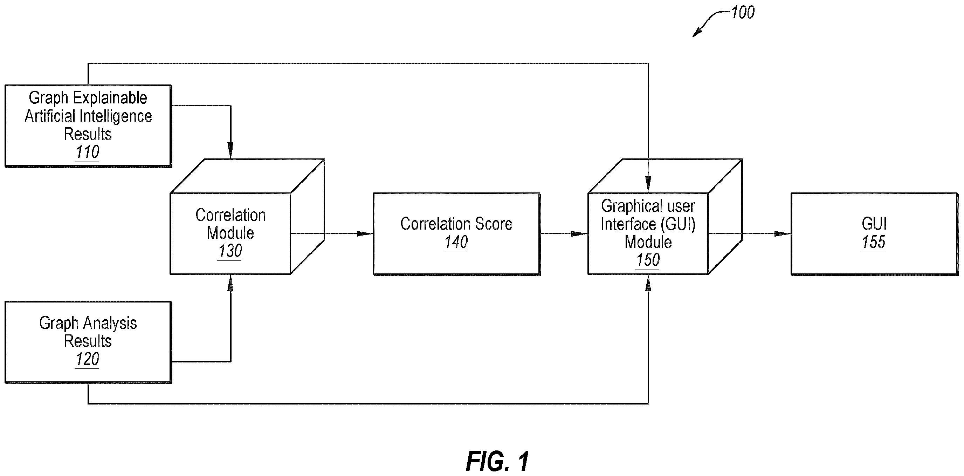

Figure 1 is a diagram representing an example system 100 of graph explainable artificial intelligence (GXAI) correlation according to at least one embodiment of the present disclosure. In some embodiments, the system 100 may include a correlation module 130 that is configured to obtain one or more GXAI analysis results 110 and one or more graph analysis results 120. The GXAI analysis results 110 may include, for example, contribution scores that describe how each element of a dataset of graph-structured data affects a classification analysis using GXAI techniques computed by a computing system employing the GXAI techniques.

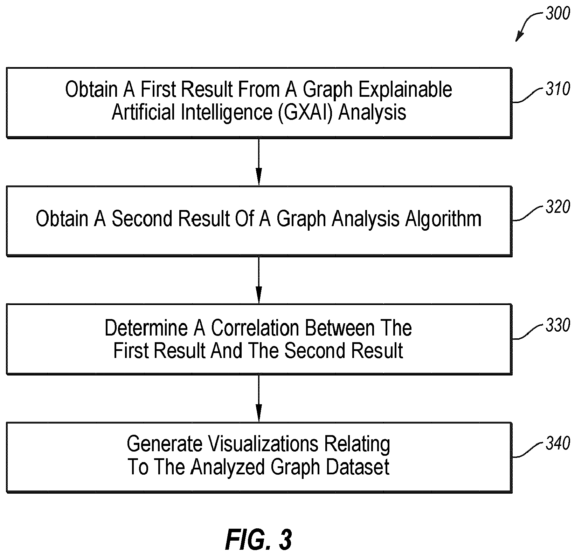

In these and other embodiments, the GXAI analysis results 110 and the graph analysis results 120 may be stored as one or more vector representations of the analyses of the graph-structured data. For example, a particular analysis based on the nodes of a particular dataset of graph-structured data may generate a node vector in which each element of the node vector corresponds to analysis results associated with a particular node of the particular dataset. As another example, a particular analysis based on the edges of a particular dataset of graph-structured data may generate an edge vector in which each element of the edge vector corresponds to analysis results associated with a particular edge of the particular dataset. Generating a vector to represent the analyses of the graph-structured data may be described in further detail in relation to Figure 3.

In some embodiments, the system 100 may include a correlation module 130 and/or a GUI module 150. Elements of the system 100, including, for example, the correlation module 130 and/or the GUI module 150 (generally referred to as "computing modules"), may include code and routines configured to enable a computing system to perform one or more operations. Additionally or alternatively, the computing modules may be implemented using hardware including a processor, a microprocessor (e.g., to perform or control performance of one or more operations), a field-programmable gate array (FPGA), or an application-specific integrated circuit (ASIC). In some other instances, the computing modules may be implemented using a combination of hardware and software. In the present disclosure, operations described as being performed by the computing modules may include operations that the computing modules may direct one or more corresponding systems to perform. The computing modules may be configured to perform a series of operations with respect to the GXAI analysis results 110, the graph analysis results 120, a correlation score, and/or a graphical user interface (GUI) 155 as described in further detail below in relation to method 300 of Figure 3.

The correlation module 130 may determine the correlation score 140 based on the obtained GXAI analysis results 110 and the graph analysis results 120. The correlation module 130 may, for example, obtain vector representations corresponding to each of the GXAI analysis results 110 and the graph analysis results 120 to determine a degree of similarity between the vector representations. In this and other examples, the degree of similarity between the GXAI analysis results 110 and the graph analysis results 120 may be represented as the correlation score 140, which, in some embodiments, may be the result of a vector comparison computation as described in further detail in relation to Figure 3.

The correlation score 140 may be obtained by a GUI module 150, which may be configured to cause the GUI 155 to present information in a particular manner. Additionally or alternatively, the GUI module 150 may obtain the GXAI analysis results 110 and the graph analysis results 120 and instruct the GUI 155 to present information relating to the GXAI analysis results 110 and the graph analysis results 120 alongside or in substitution of the correlation score 140.

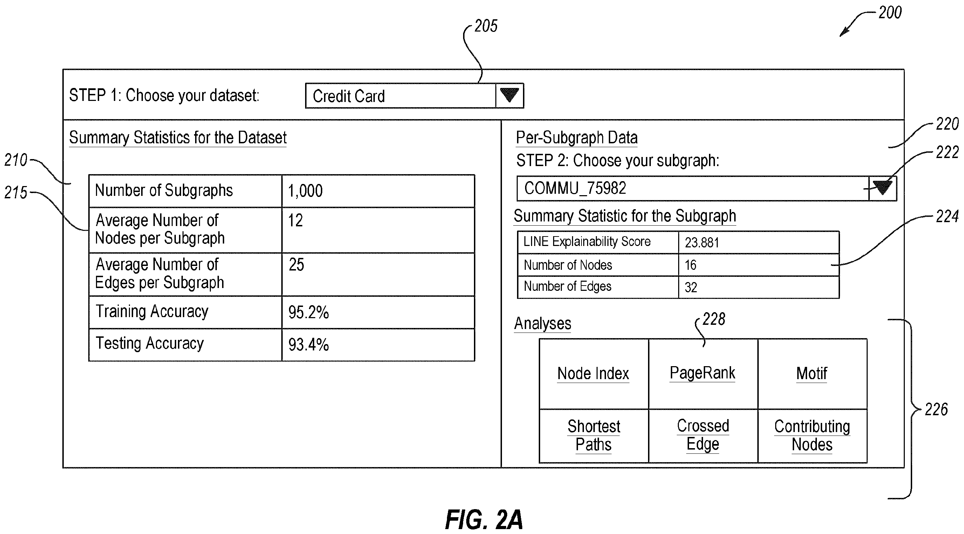

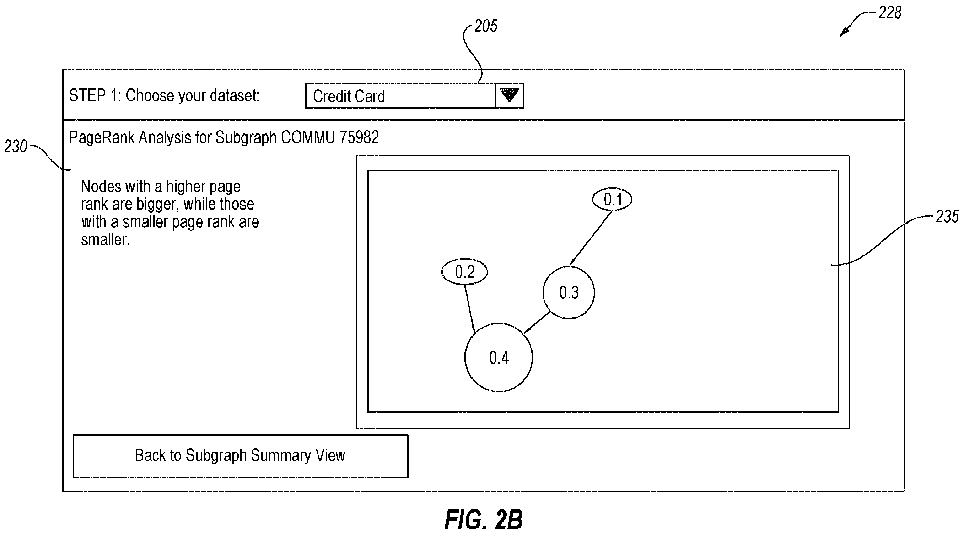

For example, the GUI module 150 may be configured to instruct the GUI 155 to present information as depicted in Figures 2A and 2B. Figures 2A and 2B illustrate examples of a GUI display 200 configured to display results of a GXAI correlation process according to at least one embodiment of the present disclosure. As illustrated in Figure 2A, the GUI display 200 may include a dataset-configuration section 205, which may allow a user to select one or more datasets of graph-structured data for the GUI display 200 to exhibit, such as in a first panel 210 and a second panel 220. The first panel 210 may include a summary 215 of various statistics relating to a particular dataset of graph-structured data. The summary 215 may indicate, for example, a number of subgraphs included in the particular dataset of graph-structured data, an average number of nodes included with each of the subgraphs, an average number of edges associated with each of the subgraphs, a training accuracy of a machine-learning model that obtained the particular dataset, a testing accuracy of the machine-learning model that obtained the particular dataset, or any other statistics associated with the particular dataset.

Additionally or alternatively, the GUI display 200 may include the second panel 220 that includes a drop-down menu 222 (or any other graphical selection tool) with which a user of the GUI display 200 may interact to select one or more of the subgraphs described in the summary 215. A subgraph summary 224 may include summarized information about the particular subgraph selected via the drop-down menu 222. For example, the subgraph summary 224 may include a GXAI explainability score (e.g., an element of a contribution score relating to the particular subgraph), the number of nodes included in the particular subgraph, the number of edges included in the particular subgraph, or any other statistic associated with the particular subgraph.

In these and other embodiments, the second panel 220 may include an analysis section 226 in which each entry of the analysis section 226 is associated with graph analysis results generated by a particular graph analysis algorithm. Turning to Figure 2B, for example, the GUI display 200 may show a page of results 228 corresponding to a PageRank algorithm. The page of results 228 may include a description 230 of particular graph analysis algorithm displayed on the page of results 228. In this and other examples, the description 230 may include a textual description of the PageRank algorithm and a brief explanation of the meaning of the PageRank algorithm and its results. Additionally or alternatively, the page of results 228 may include, for example, a visualization 235 of the results of the particular graph analysis algorithm. In this and other examples, the visualization 235 depicts various nodes and edges of a subgraph labeled as "COMMU_75982" in which each node of the subgraph is assigned a corresponding weight based on the PageRank algorithm. In this and other examples, the description 230 and the visualization 235 may be generated by the GUI module 150 or input to the GUI module 150 by a user.

In some embodiments, the GUI display 200, the first panel 210, the second panel 220, and the page of results 228 may be arranged differently from the designations of the GUI display 200, the first panel 210, the second panel 220, and the page of results 228 shown in Figures 2A and 2B. Modifications, additions, or omissions may be made to the GUI display 200 without departing from the scope of the present disclosure. For example, the first panel 210, the second panel 220, and/or the page of results 228 may include any number of other visualizations or visualizations in different configurations than as shown in Figures 2A and 2B.

Modifications, additions, or omissions may be made to the system 100 without departing from the scope of the present disclosure. For example, the designations of different elements in the manner described is meant to help explain concepts described herein and is not limiting. For instance, in some embodiments, the correlation module 130 and the GUI module 150 are delineated in the specific manner described to help with explaining concepts described herein but such delineation is not meant to be limiting. Further, the system 100 may include any number of other elements or may be implemented within other systems or contexts than those described.

Figure 3 is a flowchart of an example method 300 of performing GXAI correlation according to at least one embodiment of the present disclosure. The method 300 may be performed by any suitable system, apparatus, or device. For example, the correlation module 130 or the GUI module 150 may perform one or more operations associated with the method 300. Although illustrated with discrete blocks, the steps and operations associated with one or more of the blocks of the method 300 may be divided into additional blocks, combined into fewer blocks, or eliminated, depending on the particular implementation.

The method 300 may begin at block 310, where a first result corresponding to a GXAI analysis may be obtained. The GXAI analysis may include any machine-learning-assisted or artificial-intelligence-assisted graph analysis techniques that may analyze one or more aspects of a dataset of graph-structured data. Additionally or alternatively, the machine-learning module may be trained using a training dataset of graph-structured data that includes one or more subgraphs that already include a label or annotations regarding patterns identified in the subgraphs. For example, the GXAI analysis may be executed by a computing system that includes a machine-learning module configured to perform a clustering algorithm or a pattern recognition routine using a graph neural network or any other GXAI algorithms. The GXAI algorithms may be configured to analyze topology of one or more datasets of graph-structured data and make predictions based on the analyzed topology. In this and other examples, explainability algorithms, such as a Local Interpretable Model-agnostic Explanation (LIME) algorithm as described in "'Why Should I Trust You?' Explaining the Predictions of Any Classifier" by Ribeiro et al. in 2016, may be used to compute explainability scores that characterize how each element of the graph-structured data contributes to the predictions made by one or more of the GXAI algorithms.

In some embodiments, the GXAI analysis may determine edge-based or node-based contribution scores that may be stored as vector representations such that each element of the vector may correspond to a respective edge or node of a particular dataset of graph-structured data. A greater contribution score for a particular edge or a particular node may indicate that the particular edge or the particular node provides a greater contribution to a classification or regression result of the GXAI analysis (or in other words, the particular edge or the particular node influences the GXAI analysis more strongly). In these and other embodiments, the elements of the vector representations of the GXAI analysis (i.e., the contribution scores of each node or edge) may be normalized to facilitate comparison of the vector representations of the GXAI analysis with results of various graph analysis algorithms as described below.

At block 320, a second result corresponding to a graph analysis algorithm may be obtained. In some embodiments, the graph analysis algorithm may include any analysis techniques of graph-structured data that are used to represent one or more aspects of a dataset of the graph-structured data. The graph analysis algorithm may analyze the nodes of the graph-structured data included in the dataset. Additionally or alternatively, the graph analysis algorithm may analyze the edges of the graph-structured data included in the dataset. An example of a particular graph analysis algorithm may include a network motif analysis that identifies one or more patterns of nodes and edges that occur in the dataset of graph-structured data in which the patterns occur more frequently than node-and-edge configurations present in randomized networks of graph-structured data.

Another example of a particular graph analysis algorithm may include a node-based PageRank analysis in which each node of the dataset of graph-structured data is assigned a value indicative of an influence each node has on the dataset. The influence of a particular node may be determined, for example, according to a number of edges connecting the particular node to other nodes. In the PageRank analysis, the values determined for each of the nodes may be represented as a vector in which each entry of the vector corresponds to a node of the dataset of graph-structured data. Additionally or alternatively, the values determined by the PageRank analysis may be normalized (e.g., by dividing every value by the greatest value) such that the results of the PageRank analysis, represented by a normalized vector, may be more readily compared with the results of other graph analysis algorithms or the results of the GXAI analysis techniques.

Another example of a particular graph analysis algorithm may include an edge-based shortest path analysis in which each edge of the dataset of graph-structured data is assigned a value indicative of an influence each node has on the dataset. The influence of a particular edge may be determined, for example, based on how many times the particular edge appears in a shortest path between any two nodes of the graph-structured data. Each edge may be represented as an entry of a vector, and a value of the entry may indicate how many times the edge is included in a shortest path between two nodes. Additionally or alternatively, the vector values determined by the shortest path analysis may be normalized to facilitate comparison between the shortest path vector and any other vectors, such as the PageRank vector.

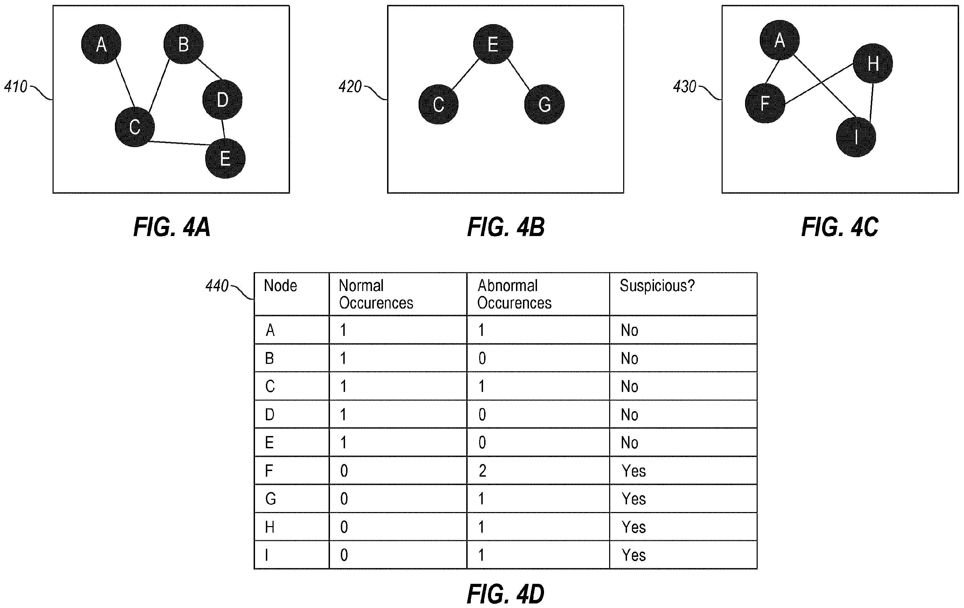

As another example, Figures 4A-4C illustrate examples of training subgraphs for performing node index analysis according to at least one embodiment of the present disclosure. A first subgraph 410 illustrated in Figure 4A may include five nodes: node A, node B, node C, node D, and node E. In this and other examples, the first subgraph 410 may be pre-classified (e.g., by a user who has already analyzed the first subgraph 410) as a subgraph of graph-structured data that includes normal behavior. Normal behavior may be determined according to a context of the graph-structured data. For example, normal behavior may include non-fraudulent financial transactions in the context of graph-structured data relating to bank accounts and transactions between the bank accounts. A second subgraph 420 illustrated in Figure 4B may include three nodes: node C, node F, and node G. In this and other examples, the second subgraph 420 may be pre-classified as a subgraph of graph-structured data that includes abnormal behavior. Abnormal behavior, in the context of bank accounts and financial transactions for example, may indicate the presence of suspicious or fraudulent transactions occurring between two or more bank accounts. Additionally or alternatively, a third subgraph 430 illustrated in Figure 4C may include four nodes: node A, node F, node H, and node I. In this and other examples, the third subgraph 430 may be pre-classified as including abnormal behavior.

Figure 4D illustrates an example analysis of the training subgraphs for node index analysis according to at least one embodiment of the present disclosure. The analysis of the training subgraphs using node index analysis may be presented as a suspiciousness table 440 in which each node included in the training subgraphs is presented as a row of the suspiciousness table 440. A count of the number of times a particular node appeared in a training subgraph pre-classified as including normal behavior (e.g., the first subgraph 410) or as including abnormal behavior (e.g., the second subgraph 420 and the third subgraph 430) may be presented in the corresponding row of the particular node. Each particular node may be classified as a suspicious node or as a normal node based on whether the particular node appears more frequently in subgraphs classified as include normal behavior or abnormal behavior. In some embodiments, the particular node may be classified as a normal node responsive to determining that a normal-behavior count corresponding to the particular node is greater than or equal to an abnormal-behavior count corresponding to the particular node. Additionally or alternatively, the particular node may be classified as a normal node responsive to determining that the normal-behavior count is greater than the abnormal-behavior count of the particular node. Additionally or alternatively, classification of the particular node as a normal node may depend on the normal-behavior count exceeding the abnormal-behavior count by some margin (e.g., a percentage of total count or an absolute number of counts).

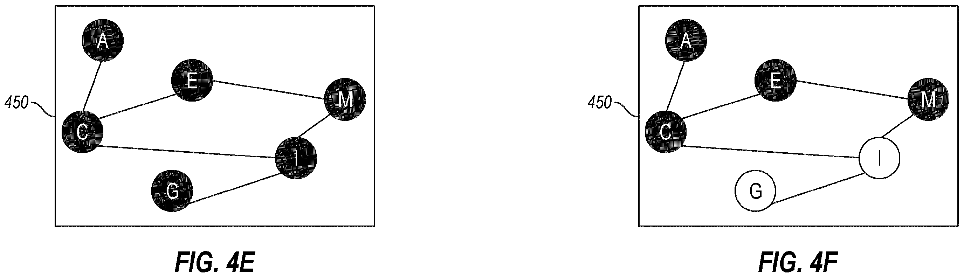

Figures 4E and 4F illustrate an example of a test graph 450 analyzed using node index analysis according to at least one embodiment of the present disclosure. In Figure 4E, the test graph 450 may include nodes that were previously included in one or more training subgraphs, such as node A, node C, node E, node G, node I, and node M (not shown in Figures 4A-4D). Based on an analysis of each of the nodes, such as the analysis included in the suspiciousness table 440 of Figure 4D, each of the nodes may be labeled as a normal node or as a suspicious node. As illustrated in Figure 4F, node A, node C, node E, and node M may be identified as normal nodes, while node G and node I are identified as suspicious nodes based on, for example, the suspiciousness table 440 of Figure 4D.

In these and other embodiments, the nodes of the test graph 450 may be represented in a quantitative form to facilitate comparison of the test graph 450 with one or more other graphs. For example, the labeled test graph 450 may be represented as a vector in which each entry of the vector represents a corresponding node of the labeled test graph 450. A value of each of the entries of the vector may represent a corresponding value assigned to the corresponding node. For example, the vector of the labeled test graph 450 may include six entries (corresponding to nodes A, C, E, G, I, and M), and each entry may include a value of one or zero depending on whether the node corresponding to each entry was labeled as a normal node or as a suspicious node. Taking a value of zero as representing a normal node, the vector of the labeled test graph 450 may be [0, 0, 0, 1, 1, 0] with the first entry of the vector corresponding to node A, the second entry corresponding to node C, the third entry corresponding to node E, the fourth entry corresponding to node G, the fifth entry corresponding to node I, and the sixth entry corresponding to node M.

Returning to the method 300, a correlation between the first result and the second result may be determined at block 330. In some embodiments, the correlation between the first result and the second result may include a comparison of a first vector corresponding to the first result (e.g., a vector representation of the results of the GXAI analysis) and a second vector corresponding to the second result (e.g., a vector representation of the results of the graph analysis algorithms). The comparison between the first vector and the second vector may be accomplished using any vector comparison techniques.

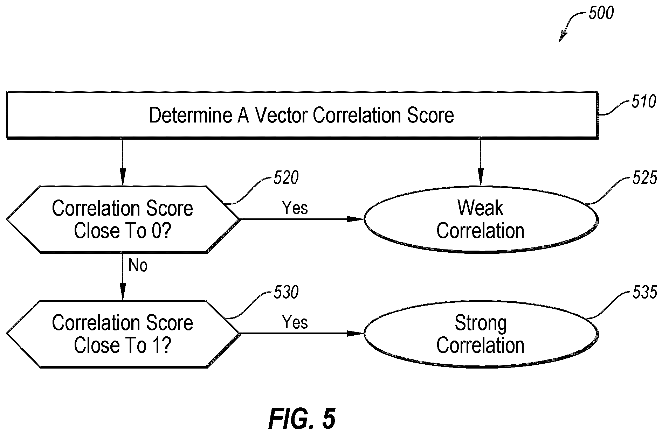

For example, Figure 5 is a flowchart of an example method 500 of assessing the similarity between GXAI contribution scores and graph analysis algorithms according to at least one embodiment of the present disclosure. The method 500 may be performed by any suitable system, apparatus, or device. For example, the correlation module 130 or the GUI module 150 may perform one or more operations associated with the method 500. Although illustrated with discrete blocks, the steps and operations associated with one or more of the blocks of the method 400 may be divided into additional blocks, combined into fewer blocks, or eliminated, depending on the particular implementation.

The method 500 may begin at block 510, where a vector correlation is determined. The vector correlation may include any vector comparison metrics, such as a cosine similarity or a Pearson correlation coefficient. The cosine similarity and the Pearson correlation coefficient may each be techniques that compare two or more vectors and return a correlation score with a corresponding implication. For example, a correlation score of zero indicates no correlation, while a correlation score of one indicates a strong correlation for the cosine similarity. For the Pearson correlation coefficient, a correlation score of zero indicates no correlation, while a correlation score of negative one or positive one indicates strong correlation. Based on the implication of the correlation scores of both the cosine similarity and the Pearson correlation coefficient, the method 500 may determine whether any two vectors, such as the first vector representing the GXAI analysis and the second vector representing a particular graph analysis algorithm, are weakly or strongly correlated.

At block 520, whether the correlation score is close to zero may be determined. Determining whether the correlation score is close to zero may include determining whether the correlation score is within a first threshold range close to zero. The first threshold range may be a negative and/or a positive value set by a user around zero. Additionally or alternatively, the first threshold range may be determined using some standard deviation value (e.g., +/- 0.005, +/-0.01, +/-0.05, +/- 0.1, +/- 0.2, etc.). Responsive to determining that the correlation score is close to zero, the method 500 may proceed to block 525, which indicates that the GXAI contribution score and the results of the graph analysis algorithm are weakly correlated. In this and other embodiments, the results of the graph analysis algorithm may not provide a useful interpretation of the GXAI contribution score.

Responsive to determining that the correlation score is not close to zero, the method 500 may proceed to block 530, where whether the correlation score is close to one may be determined. In some embodiments, determining whether the correlation score is close to one may include determining whether the correlation score is within a second threshold range close to one. The second threshold range may be a negative and/or a positive value set by the user around one. Additionally or alternatively, the second threshold range may be determined by some standard deviation value (e.g., +/- 0.005, +/- 0.01, +/-0.05, +/- 0.1, +/- 0.2, etc.). Responsive to determining that the correlation score is close to one, the method 500 may proceed to block 535, which indicates that the GXAI contribution score and the results of the graph analysis algorithm are strongly correlated. In this and other embodiments, the results of the graph analysis algorithm may provide a useful interpretation of the GXAI contribution score.

Modifications, additions, or omissions may be made to the method 500 without departing from the scope of the disclosure. For example, the designations of different elements in the manner described is meant to help explain concepts described herein and is not limiting. Further, the method 500 may include any number of other elements or may be implemented within other systems or contexts than those described.

Returning to the method 300 and the description of the operations at block 330, the first result and/or the second result may be represented as sparse vectors. In some embodiments, many of the elements of the sparse vectors may include a value of zero. For example, a particular sparse vector having twenty elements may include fifteen elements with a value of zero and five elements with non-zero values. In this and other examples, a sparsity of a particular sparse vector may be measured based on comparison between a number of elements having a value of zero and a number of elements having non-zero values (e.g., a ratio, a fraction, a percentage, etc.). In some instances, the first results and/or the second results may be represented as sparse vectors because the influence or relatedness of many of the nodes or edges included in a particular dataset of graph-structured data may be isolated; many of the nodes or edges may not include relationships or influence many of the other nodes or edges in the dataset. Thus, the non-zero elements of the sparse vectors may indicate whether a relationship exists between two nodes or edges and a quantitative description of the relationship.

At block 340, one or more visualizations relating to the analyzed dataset of graph-structured data may be generated. In some embodiments, the visualizations may include any textual, pictorial, or numerical representation of the first result corresponding to the GXAI analysis, the second result corresponding to the graph analysis algorithm, the correlation between the first result and the second result, or the dataset of graph-structured data itself. In these and other embodiments, the visualizations may include the summary 215, the subgraph summary 224, the description 230, the visualization of the results 235 described in relation to Figures 2A and 2B, or any other representations relating to the analyzed dataset of graph-structured data.

Modifications, additions, or omissions may be made to the method 300 without departing from the scope of the disclosure. For example, the designations of different elements in the manner described is meant to help explain concepts described herein and is not limiting. Further, the method 300 may include any number of other elements or may be implemented within other systems or contexts than those described.

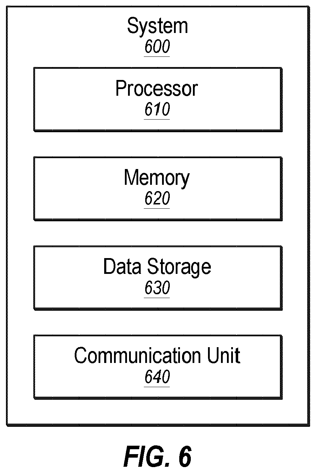

Figure 6 illustrates an example computing system 600, according to at least one embodiment described in the present disclosure. The computing system 600 may include a processor 610, a memory 620, a data storage 630, and/or a communication unit 640, which all may be communicatively coupled. Any or all of the system 100 of Figure 1 may be implemented as a computing system consistent with the computing system 600.

Generally, the processor 610 may include any suitable special-purpose or general-purpose computer, computing entity, or processing device including various computer hardware or software modules and may be configured to execute instructions stored on any applicable computer-readable storage media. For example, the processor 610 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in Figure 6, it is understood that the processor 610 may include any number of processors distributed across any number of network or physical locations that are configured to perform individually or collectively any number of operations described in the present disclosure. In some embodiments, the processor 610 may interpret and/or execute program instructions and/or process data stored in the memory 620, the data storage 630, or the memory 620 and the data storage 630. In some embodiments, the processor 610 may fetch program instructions from the data storage 630 and load the program instructions into the memory 620.

After the program instructions are loaded into the memory 620, the processor 610 may execute the program instructions, such as instructions to cause the computing system 600 to perform the operations of the method 300 of Figure 3 or the method 500 of Figure 5. For example, the computing system 600 may execute the program instructions to obtain a first result from a GXAI analysis, obtain a second result from a graph analysis algorithm, determine a correlation between the first result and the second result, and generate visualizations relating to the analyzed dataset of graph-structured data.

The memory 620 and the data storage 630 may include computer-readable storage media or one or more computer-readable storage mediums for having computer-executable instructions or data structures stored thereon. Such computer-readable storage media may be any available media that may be accessed by a general-purpose or special-purpose computer, such as the processor 610. For example, the memory 620 and/or the data storage 630 may include the GXAI analysis results 110, the graph analysis results 120, the correlation score 140, or the GUI 155 of Figure 1. In some embodiments, the computing system 600 may or may not include either of the memory 620 and the data storage 630.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 610 to perform a particular operation or group of operations.

The communication unit 640 may include any component, device, system, or combination thereof that is configured to transmit or receive information over a network. In some embodiments, the communication unit 640 may communicate with other devices at other locations, the same location, or even other components within the same system. For example, the communication unit 640 may include a modem, a network card (wireless or wired), an optical communication device, an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, or others), and/or the like. The communication unit 640 may permit data to be exchanged with a network and/or any other devices or systems described in the present disclosure. For example, the communication unit 640 may allow the system 600 to communicate with other systems, such as computing devices and/or other networks.

One skilled in the art, after reviewing this disclosure, may recognize that modifications, additions, or omissions may be made to the system 600 without departing from the scope of the present disclosure. For example, the system 600 may include more or fewer components than those explicitly illustrated and described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the present disclosure. Thus, the present disclosure is limited only by the claims.

In some embodiments, the different components, modules, engines, and services described herein may be implemented as objects or processes that execute on a computing system (e.g., as separate threads). While some of the systems and processes described herein are generally described as being implemented in software (stored on and/or executed by general purpose hardware), specific hardware implementations or a combination of software and specific hardware implementations are also possible and contemplated.

Terms used in the present disclosure and especially in the appended claims (e.g., bodies of the appended claims) are generally intended as "open terms" (e.g., the term "including" should be interpreted as "including, but not limited to.").

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is expressly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase preceding two or more alternative terms, whether in the description, claims, or drawings, should be understood to contemplate the possibilities of including one of the terms, either of the terms, or both of the terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method, comprising:
obtaining a first result of a classification analysis using graph explainable artificial intelligence (GXAI) techniques on a dataset of graph-structured data;
obtaining a second result of a graph analysis algorithm that represents a relationship between elements of the dataset of graph-structured data;
determining a correlation between the first result and the second result; and
generating a display within a graphical user interface (GUI) that visualizes similarities between the first result and the second result based on the correlation.

2. The method of claim 1, wherein the first result of the classification analysis is a contribution score that describes how each of the elements of the dataset of graph-structured data affects the classification analysis.

3. The method of claim 1, wherein determining the correlation between the first result and the second result comprises:
generating a first vector of the first result of the classification analysis;
generating a second vector of the second result of the graph analysis algorithm; and
computing a Pearson correlation coefficient or a cosine similarity based on the first vector and the second vector.

4. The method of claim 3, wherein the first vector and the second vector are sparse vectors that each include fewer nonzero vector elements than zero vector elements.

5. The method of claim 1, wherein the graph analysis algorithm includes at least one of: a network motif analysis, a node index analysis, a PageRank, or a shortest path analysis.

6. The method of claim 5, wherein obtaining the second result of the graph analysis algorithm using the node index analysis comprises:
initializing a normal node count and a suspicious node count;
determining a number and an identity of normal nodes corresponding to each training graph of a plurality of training graphs;
determining a number and an identity of suspicious nodes corresponding to each training graph of the plurality of training graphs;
incrementing the normal node count according to the number of normal nodes determined from each of the training graphs;
incrementing the suspicious node count according to the number of suspicious nodes determined from each of the training graphs;
labeling each node included in the plurality of training graphs as a normal node or an suspicious node based on whether each node is associated with a greater normal node count or a greater suspicious node count;
identifying, in a test graph, one or more suspicious nodes, wherein the test graph includes one or more of the labeled nodes from the plurality of training graphs; and
generating a vector representing the test graph based on the nodes of the test graph being identified as suspicious nodes or normal nodes.

7. The method of claim 1, wherein the display within the GUI comprises:
a first visualization of the second result of the graph analysis algorithm;
a second visualization of a degree of similarity between the first result and the second result based on the correlation between the first result and the second result; and
a plurality of summary statistics relating to one or more of the elements of the dataset of graph-structured data.

8. One or more non-transitory computer-readable storage media configured to store instructions that, in response to being executed, cause a system to perform operations, the operations comprising:
obtaining a first result of a classification analysis using graph explainable artificial intelligence (GXAI) techniques on a dataset of graph-structured data;
obtaining a second result of a graph analysis algorithm that represents a relationship between elements of the dataset of graph-structured data;
determining a correlation between the first result and the second result; and
generating a display within a graphical user interface (GUI) that visualizes similarities between the first result and the second result based on the correlation.

9. A system, comprising:
one or more processors; and
one or more non-transitory computer-readable storage media configured to store instructions that, in response to being executed, cause the system to perform operations, the operations comprising:
obtaining a first result of a classification analysis using graph explainable artificial intelligence (GXAI) techniques on a dataset of graph-structured data;
obtaining a second result of a graph analysis algorithm that represents a relationship between elements of the dataset of graph-structured data;
determining a correlation between the first result and the second result; and
generating a display within a graphical user interface (GUI) that visualizes similarities between the first result and the second result based on the correlation.

10. The system of claim 9, wherein the first result of the classification analysis is a contribution score that describes how each of the elements of the dataset of graph-structured data affects the GXAI classification analysis.

11. The system of claim 9, wherein determining the correlation between the first result and the second result comprises:
generating a first vector of the first result of the classification analysis;
generating a second vector of the second result of the graph analysis algorithm; and
computing a Pearson correlation coefficient or a cosine similarity based on the first vector and the second vector.

12. The system of claim 9, wherein the graph analysis algorithm includes at least one of: a network motif analysis, a node index analysis, a PageRank, or a shortest path analysis.

13. The system of claim 12, wherein obtaining the second result of the graph analysis algorithm using the node index analysis comprises:
initializing a normal node count and a suspicious node count;
determining a number and an identity of normal nodes corresponding to each training graph of a plurality of training graphs;
determining a number and an identity of suspicious nodes corresponding to each training graph of the plurality of training graphs;
incrementing the normal node count according to the number of normal nodes determined from each of the training graphs;
incrementing the suspicious node count according to the number of suspicious nodes determined from each of the training graphs;
labeling each node included in the plurality of training graphs as a normal node or a suspicious node based on whether each node is associated with a greater normal node count or a greater suspicious node count;
identifying, in a test graph, one or more suspicious nodes, wherein the test graph includes one or more of the labeled nodes from the plurality of training graphs; and
generating a vector representing the test graph based on the nodes of the test graph being identified as suspicious nodes or normal nodes.

14. The system of claim 9, wherein the display within the GUI comprises:
a first visualization of the second result of the graph analysis algorithm;
a second visualization of a degree of similarity between the first result and the second result based on the correlation between the first result and the second result; and
a plurality of summary statistics relating to one or more of the elements of the dataset of graph-structured data.
